# EUROPEAN PATENT APPLICATION

(11) **EP 2 717 515 A1**
(43) Date of publication of application: **09.04.2014**
(21) Application number: 12801795.1
(22) Date of filing: 30.06.2012
(51) Int. Cl.: H04L 12/26

(54) **VIRTUAL PORT MONITORING METHOD AND DEVICE**

(71) Applicant: Huawei Technologies Co., Ltd., Shenzhen 518129 (CN)
(72) Inventor: CAI, Shishun, Shenzhen, Guangdong 518129 (CN)
(74) Representative: Goddar, Heinz J.
(86) International application number: PCT/CN2012/077988
(87) International publication number: WO 2014/000297

(57) **Abstract**

Embodiments of the present invention provide a virtual port monitoring method and apparatus. The virtual port monitoring method includes: intercepting a packet received and/or sent by at least one mirror source virtual port; and when the packet received and/or sent by the at least one mirror source virtual port is intercepted, mirroring the packet to the mirror destination virtual port, so that a monitoring virtual machine monitors the at least one mirror source virtual port according to the mirrored packet received from the mirror destination virtual port. The virtual port monitoring method and apparatus provided in the embodiments of the present invention implement the monitoring on packets among multiple virtual machines of a same physical server, and improves the reliability and security of a system.

## Description

### FIELD OF THE INVENTION

Embodiments of the present invention relate to information technologies, and in particular, to a virtual port monitoring method and apparatus.

### BACKGROUND OF THE INVENTION

In the current boom of cloud calculation, the virtualization technologies develop rapidly. A virtual switching technology is a network switching technology which has been developed rapidly in recent years. The so-called virtual switching is to implement a network switching function between virtual machines and between a virtual machine and a physical machine in a virtualization environment. A network interface card in the prior art is usually integrated with a virtual switching function, which further increases a virtualization feature of the network interface card.

The working principle of network interface card virtual switching is briefly described as follows: for a received packet, according to packet header information, the network interface card determines to which virtual machine the packet is sent, and then forwards the packet to a destination virtual machine. For a packet sent by the virtual machine, according to packet header information, the network interface card determines whether the packet is sent to other virtual machines of the same physical server or sent to an external apparatus for corresponding processing.

In the prior art, an external apparatus, for example, a switch, may monitor a packet sent to a network interface card or sent from a network interface card, but cannot implement monitoring on packets among multiple virtual machines of the same physical server, and once a network exception occurs, precise positioning cannot be implemented.

### SUMMARY OF THE INVENTION

Embodiments of the present invention provide a virtual port monitoring method and apparatus, so as to implement the monitoring on packets among multiple virtual machines of a same physical server, and improve the reliability and security of a system.

In a first aspect, an embodiment of the present invention provides a virtual port monitoring method, including:
intercepting a packet received and/or sent by at least one mirror source virtual port; and
when the packet received and/or sent by the at least one mirror source virtual port is intercepted, mirroring the packet to a mirror destination virtual port, so that a monitoring virtual machine monitors the at least one mirror source virtual port according to the mirrored packet received from the mirror destination virtual port.

In a first possible implementation manner, a physical server where the at least one mirror source virtual port and the mirror destination virtual port are located is the same physical server where the monitoring virtual machine is located.

By combining the first aspect or the first possible implementation manner of the first aspect, in a second possible implementation manner, before intercepting a packet received and/or sent by at least one mirror source virtual port, the method further includes:
according to a received configuration parameter, configuring at least one virtual port as the mirror source virtual port, configuring a virtual port other than the at least one virtual port as the mirror destination virtual port, and setting a mirroring relationship between the at least one mirror source virtual port and the mirror destination virtual port, and a mirroring mode of each mirror source virtual port, where the mirroring mode includes one of the following modes: receiving and sending a mirror, receiving a mirror or sending a mirror.

By combining the first aspect or the first or the second possible implementation manner of the first aspect, in a third possible implementation manner, the virtual port monitoring method further includes:
parsing packet header information of a first packet received from a physical port, obtaining a first destination address, and sending the first packet to a virtual port corresponding to the first destination address.

By combining the first aspect or the first or the second possible implementation manner of the first aspect, in a fourth possible implementation manner, the virtual port monitoring method further includes:
parsing packet header information of a second packet received from a virtual port, obtaining a second destination address, if the second destination address corresponds to a virtual port, sending the second packet to the virtual port corresponding to the second destination address, and if the second destination address corresponds to no virtual port, sending the second packet to the physical port.

In a second aspect, an embodiment of the present invention provides a virtual port monitoring method, including:
receiving a mirrored packet from a mirror destination virtual port; and
according to the mirrored packet, monitoring at least one mirror source virtual port, where the mirrored packet is a mirrored packet of a packet received and/or sent by the at least one mirror source virtual port.

In a first possible implementation manner, the method is executed by a monitoring virtual machine; and
a physical server where the at least one mirror source virtual port and the mirror destination virtual port are located is the same physical server where the monitoring virtual machine is located.

In a third aspect, an embodiment of the present invention provides a virtual port monitoring apparatus, including:
an interception unit, configured to intercept a packet received and/or sent by at least one mirror source virtual port; and
a mirroring unit, configured to, when the packet received and/or sent by the at least one mirror source virtual port is intercepted, mirror the packet to a mirror destination virtual port, so that a monitoring virtual machine monitors the at least one mirror source virtual port according to the mirrored packet received from the mirror destination virtual port.

In a first possible implementation manner, a physical server where the at least one mirror source virtual port and the mirror destination virtual port are located is the same physical server where the monitoring virtual machine is located.

By combining the third aspect or the first possible implementation manner of the third aspect, in a second possible implementation manner, the virtual port monitoring apparatus further includes:
a configuration unit, configured to, according to a received configuration parameter, configure at least one virtual port as the mirror source virtual port, configure a virtual port other than the at least one virtual port as the mirror destination virtual port, and set a mirroring relationship between the at least one mirror source virtual port and the mirror destination virtual port and a mirroring mode of each mirror source virtual port, where the mirroring mode includes one of the following modes: receiving and sending a mirror, receiving a mirror or sending a mirror.

By combining the third aspect or the first or the second possible implementation manner of the third aspect, in a third possible implementation manner, the virtual port monitoring apparatus further includes:
a first forwarding unit, configured to parse packet header information of a first packet received from a physical port, obtain a first destination address, and send the first packet to a virtual port corresponding to the first destination address.

By combining the third aspect or the first or the second possible implementation manner of the third aspect, in the third possible implementation manner, the virtual port monitoring apparatus further includes:
a second forwarding unit, configured to parse packet header information of a second packet received from a virtual port, obtain a second destination address, if the second destination address corresponds to a virtual port, send the second packet to the virtual port corresponding to the second destination address, and if the second destination address corresponds to no virtual port, send the second packet to the physical port.

In a fourth aspect, an embodiment of the present invention provides a network interface card, including a physical port, multiple virtual network interface cards and a virtual port corresponding to each virtual network interface card, and further including a virtual port monitoring apparatus provided in the embodiments of the present invention.

The multiple virtual ports include at least one mirror source virtual port and a mirror destination virtual port.

In a fifth aspect, an embodiment of the present invention provides a server, including multiple virtual machines, and further including a network interface card provided in the embodiments of the present invention.

Each virtual machine is allocated a virtual network interface card of the network interface card, and the multiple virtual machines include at least one monitoring virtual machine, where the virtual network interface card allocated to the monitoring virtual machine provides a mirrored packet received from the mirror destination virtual port of the network interface card to the monitoring virtual machine.

It can be known from the forgoing technical solutions that, in the virtual port monitoring method and apparatus provided in the embodiments of the present invention, a virtual port monitoring apparatus mirrors a packet received and/or sent by at least one mirror source virtual port to a mirror destination virtual port, so that a monitoring virtual machine monitors the at least one mirror source virtual port according to the mirrored packet received from the mirror destination virtual port. By monitoring at least one mirror source virtual port, the monitoring on a virtual machine corresponding to the mirror source virtual port is implemented, and the monitoring on packets among multiple virtual machines of a same physical server is further implemented. When a network exception occurs, exception positioning is implemented easily and the reliability and security of a system is improved.

### BRIEF DESCRIPTION OF THE DRAWINGS

FIG 1 is a flow chart of a virtual port monitoring method provided in an embodiment of the present invention;
FIG. 2 is a flow chart of another virtual port monitoring method provided in an embodiment of the present invention;
FIG 3 is a flow chart of still another virtual port monitoring method provided in an embodiment of the present invention;
FIG 4 is a schematic structural diagram of a virtual port monitoring apparatus provided in an embodiment of the present invention;
FIG. 5a is a schematic structural diagram of another virtual port monitoring apparatus provided in an embodiment of the present invention;
FIG 5b is a schematic structural diagram of still another virtual port monitoring apparatus provided in an embodiment of the present invention;
FIG. 6 is a schematic structural diagram of a network interface card provided in an embodiment of the present invention; and
FIG. 7 is a schematic structural diagram of a server provided in an embodiment of the present invention.

### DETAILED DESCRIPTION OF THE EMBODIMENT

To make objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

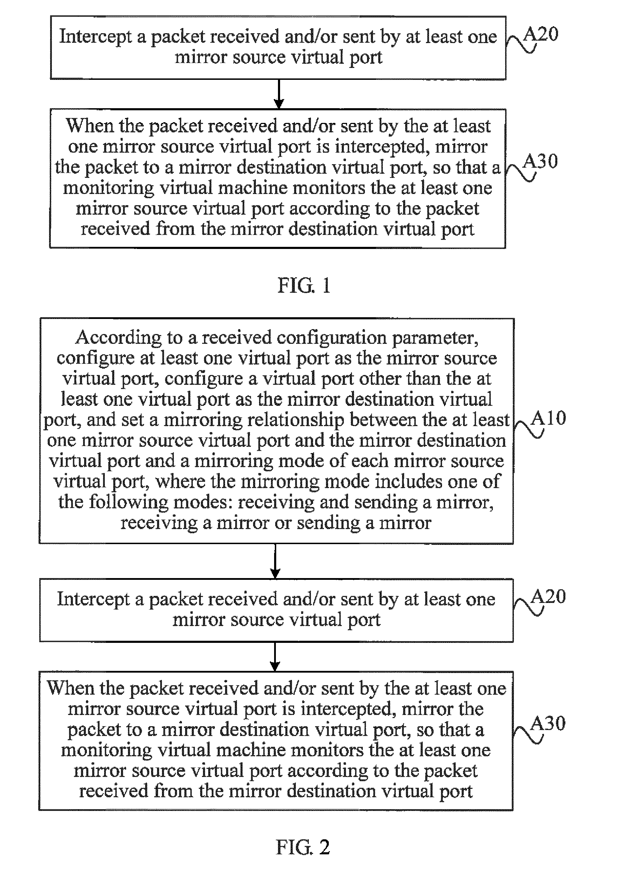

FIG. 1 is a flow chart of a virtual port monitoring method provided in an embodiment of the present invention. As shown in FIG. 1, a virtual port monitoring method provided in this embodiment may be specifically applied to a traffic monitoring process of a virtual machine of a server. A physical network interface card is specifically installed on the server, where the physical network interface card supports a virtual switching function, and multiple virtual network interface cards may be virtualized from the physical network interface card. Multiple virtual machines may be created on the server, where each virtual machine is allocated a virtual network interface card, so that the virtual machine may receive/send a packet through the virtual network interface card allocated to it. Allocating virtual network interface cards to virtual machines may be specifically implemented through a virtual machine management platform, where the virtual machine management, for example, may be XenCenter of citrix or vCenter of VMware, or the like. Multiple virtual ports and one physical port are further set on the physical network interface card, where each virtual port corresponds to a virtual network interface card, namely, corresponds to a virtual machine. A packet sent to the virtual machine may be sent to the virtual port, and the packet sent by the virtual machine may be sent through the virtual port. By monitoring the virtual port, the monitoring on the virtual machine corresponding to the virtual port may be implemented. The physical port is connected to an external device (such as a switch), so as to implement the communication between the server and an external device. A group of virtual machines, virtual network interface cards and virtual ports are bound together to implement the communication between the virtual machines inside the server and implement the communication between a virtual machine inside the server and other physical devices or virtual devices outside the server.

The virtual port monitoring method provided in this embodiment may be executed by a virtual port monitoring apparatus, where the virtual port monitoring apparatus may be integrated in a physical network interface card. The virtual port monitoring apparatus may be implemented by adopting an embedded controller, or implemented by adopting a field-programmable gate array (Field-Programmable Gate Array, FPGA for short) or an application specific integrated circuit (Application Specific Integrated Circuit, ASIC for short).

The virtual port monitoring method provided in this embodiment specifically includes:

Step A20: Intercept a packet received and/or sent by at least one mirror source virtual port.

Step A30: When the packet received and/or sent by the at least one mirror source virtual port is intercepted, mirror the packet to a mirror destination virtual port, so that a monitoring virtual machine monitors the at least one mirror source virtual port according to the packet received from the mirror destination virtual port.

Specifically, a mirroring relationship between virtual ports may be preconfigured, a virtual port is configured as a mirror destination virtual port, another virtual port is configured as a mirror source virtual port, and a mirroring relationship between the two virtual ports is set, and then, a packet received and/or sent through the mirror source virtual port is mirrored to the mirror destination virtual port. A mirroring process may be specifically implemented by duplicating the packet. A mirroring mode may further be set according to a monitoring requirement, for example, only a packet sent from the mirror source virtual port is mirrored to the mirror destination virtual port, or only a packet received from the mirror source virtual port is mirrored to the mirror destination virtual port, or packets sent from and received from the mirror source virtual port are all mirrored to the mirror destination virtual port. A mirror destination virtual port may correspond to multiple mirror source virtual ports, so as to implement centralized monitoring on the multiple mirror source virtual ports. For example, the physical network interface card is set with five virtual ports, which are vNIC1, vNIC2, vNIC3, vNIC4 and vNIC5, respectively. vNIC1 may be set as a mirror destination virtual port, and vNIC2, vNIC3, vNIC4 and vNIC5 are all set as mirror source virtual ports corresponding to vNIC1, and then, the packets received from and/or sent from vNIC2, vNIC3, vNIC4 and vNIC5 are mirrored to vNIC1.

During a practical application, any one of virtual machines in a server may be set as a monitoring virtual machine. The virtual port monitoring apparatus configures the virtual port corresponding to the monitoring virtual machine as a mirror destination virtual port, where the virtual port corresponding to the virtual machine corresponds to a virtual network interface card allocated to the virtual machine; when multiple virtual machines need to be monitored, for each virtual machine, the virtual port monitoring apparatus configures the virtual port, which is corresponding to the virtual network interface card allocated to the virtual machine, as a mirror source virtual port, and sets a mirroring relationship between the mirror destination virtual port and multiple mirror source virtual ports, and a mirroring mode. The mirroring mode in which sent and received packets are all mirrored is taken as an example to describe the virtual port monitoring method provided in this embodiment: the virtual network interface card allocated to the monitoring virtual machine receives and sends packets through the mirror destination virtual port, and the virtual network interface card allocated to the monitored virtual machine receives and sends packets through its respective corresponding mirror source virtual port. The virtual port monitoring apparatus mirrors all packets received and sent from the mirror source virtual port to the mirror destination virtual port, and the virtual network interface card allocated to the monitoring virtual machine receives a mirrored packet from the mirror destination virtual port. Because packet header information of the mirrored packet includes a source address and a destination address, the monitoring virtual machine may learn, according to the source address in the packet header information, which virtual machine the packet is sent from, and the monitoring virtual machine may further use a packet analysis tool to analyze the packet to obtain the source of the packet, so as to implement the monitoring on packet traffic and packet content. When a network exception occurs, precise positioning may be performed according to the situation of the packet received and sent by the monitored virtual machine. For example, when a monitored virtual machine attacks another monitored virtual machine over a network and a network exception is caused, because the two virtual machines are both monitored by a monitoring virtual machine, exception positioning is implemented quite easily.

In the virtual port monitoring method provided in this embodiment, the virtual port monitoring apparatus intercepts a packet received and/or sent by at least one mirror source virtual port, and when the packet received and/or sent by the at least one mirror source virtual port is intercepted, the packet is mirrored to the mirror destination virtual port, so that the monitoring virtual machine monitors at least one mirror source virtual port according to the mirrored packet received by the virtual network interface card allocated to the monitoring virtual machine from the mirror destination virtual port. By monitoring at least one mirror source virtual port, the monitoring on a virtual machine corresponding to the mirror source virtual port is implemented, and the monitoring on packets among multiple virtual machines of a same physical server is further implemented. When a network exception occurs, exception positioning is implemented quite easily and the reliability and security of a system is improved.

FIG 2 is a flow chart of another virtual port monitoring method provided in an embodiment of the present invention. As shown in FIG. 2, as a specific implementation manner, a physical server where the mirror source virtual port and the mirror destination virtual port are located is the same physical server where the monitoring virtual machine is located.

In this embodiment, in step A20, before intercepting the packet received and/or sent by at least one mirror source virtual port, the method further includes the following steps:

Step A 10: According to a received configuration parameter, configure at least one virtual port as the mirror source virtual port, configure a virtual port other than the at least one virtual port as the mirror destination virtual port, and set a mirroring relationship between the at least one mirror source virtual port and the mirror destination virtual port, and a mirroring mode of each mirror source virtual port, where the mirroring mode includes one of the following modes: receiving and sending a mirror, receiving a mirror or sending a mirror.

Specifically, the configuration parameter may be a parameter input by an administrator for performing mirror configuration for the virtual port, or may be obtained from other management devices. A physical network interface card usually has a driver for a management plane, where the driver provides the application programming interface (Application Programming Interface, API interface for short) for configuring the physical network interface card, and may invoke the API interface to input the configuration parameter. When multiple mirror source virtual ports are configured, each mirror source virtual port may have a different mirroring mode.

The specific implementation process of configuration may be: setting a configuration table in a physical network interface card. As shown in Table 1, configuration parameters recorded in the configuration table include a mirror source virtual port, a mirror destination virtual port and a mirroring mode. SrcPort represents a port number of a source mirror port; DestPort represents a port number of a destination mirror port; and Mode represents a mirroring mode, where 1 represents receiving a mirror, 2 represents sending a mirror, and 3 represents receiving and sending a mirror. When an administrator performs parameter configuration, the physical network interface card records received configuration parameters to the configuration table. The example in Table 1 represents that the administrator configures two mirroring rules: the first is to mirror a packet received by the virtual port 1 to the virtual port 20, and the second is to mirror all packets received and sent by the virtual ports 2, 3, 4 and 5 to the virtual port 21. When the physical network interface card receives and sends packets, the records in the configuration table are looked up, and a mirroring operation for the packet is performed according to the mirroring rule in the configuration table.

**Table 1**

| SrcPort | DestPort | Mode |
|---|---|---|
| 1 | 20 | 1 |
| 2,3,4,5 | 21 | 3 |

In this embodiment, the virtual port monitoring method may further include the following steps:
parsing packet header information of a first packet received from a physical port, obtaining a first destination address, and sending the first packet to a virtual port corresponding to the first destination address.

Specifically, the packet header information of the packet includes a source address and a destination address, where the source address and the destination address may specifically be a source medium access control (Medium Access Control, MAC for short) address and a destination MAC address. Each virtual network interface card has an MAC address, and a virtual machine which is allocated the virtual network interface card may be identified through the MAC address.

The virtual port monitoring apparatus receives the first packet from the physical port, where the first packet is a packet sent by an external device connected to the physical port. The virtual port monitoring apparatus parses the packet header information of the first packet, and obtains a first destination address. Because a virtual machine, a virtual network interface card and a virtual port are bound together, a virtual port may be determined according to the first destination address, and the first packet is sent to the virtual port. The virtual port may be a mirror source virtual port or a mirror destination virtual port.

In this embodiment, the virtual port monitoring method may further include the following steps:
parsing packet header information of a second packet received from a virtual port, obtaining a second destination address, if the second destination address corresponds to a virtual port, sending the second packet to the virtual port corresponding to the second destination address, and if the second destination address corresponds to no virtual port, sending the second packet to the physical port.

The virtual port monitoring apparatus receives a second packet from a virtual port, where the virtual port may be a mirror source virtual port or a mirror destination virtual port. The second packet is a packet sent by a virtual machine corresponding to the virtual port. The virtual port monitoring apparatus parses the packet header information of the second packet, obtains a second destination address, if the second destination address corresponds to a virtual port, it indicates that the second packet is sent to another virtual machine inside the server, and the second packet is sent to the virtual port. The second destination address corresponds to no virtual port, it indicates that the second packet is sent to an external device, and the second packet is sent to the physical port.

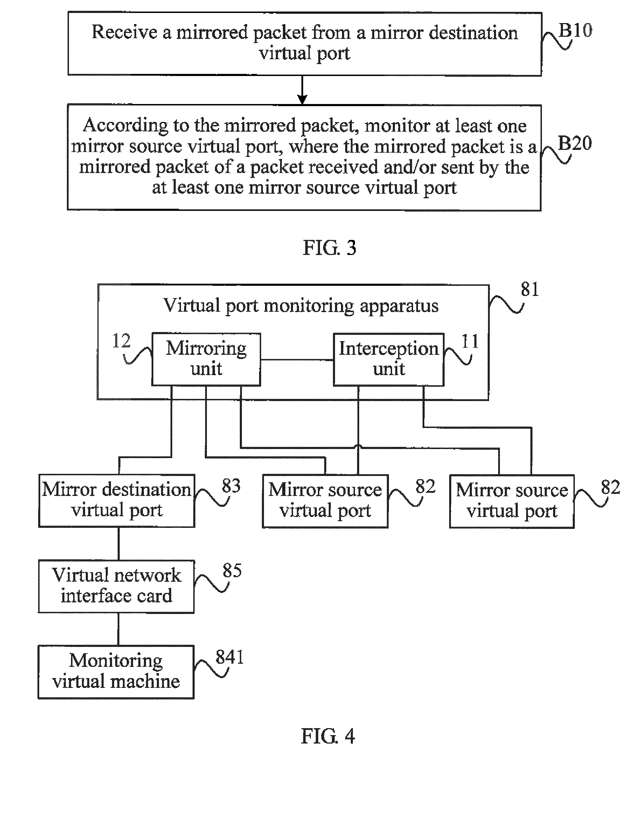

FIG. 3 is a flow chart of still another virtual port monitoring method provided in an embodiment of the present invention. As shown in FIG. 3, the virtual port monitoring method provided in this embodiment may be specifically applied to a traffic monitor process of a virtual machine of a server, and may be implemented in cooperation with the virtual port monitoring method applied in the virtual port monitoring apparatus provided in any embodiment of the present invention, the specific implementation process is not repeated herein again. The virtual port monitoring method provided in this embodiment may be executed by a virtual machine on a server and a virtual machine used for monitoring is set as a monitoring virtual machine. The virtual port monitoring method provided in this embodiment specifically includes:

Step B10: Receive a mirrored packet from a mirror destination virtual port.

Step B20: According to the mirrored packet, monitor at least one mirror source virtual port, where the mirrored packet is a mirrored packet of a packet received and/or sent by the at least one mirror source virtual port.

The monitoring virtual machine may analyze the mirrored packet. The analysis process for the packet may specifically be implemented by adopting a packet capture analysis tool. The packet capture analysis tool, for example, may be the Wireshark (Ethreal) under the Windows operating system, or the tcpdump under the Linux operating system, or other analysis software.

In the virtual port monitoring method provided in this embodiment, the monitoring virtual machine monitors the mirror source virtual port according to the mirrored packet received from the mirror destination virtual port. Because the mirrored packet is a packet obtained by mirroring a packet received and/or sent from at least one mirror source virtual port to the mirror destination virtual port, the monitoring on other virtual machines on the server is implemented, and the monitoring on packets among multiple virtual machines of the same server is further implemented. When a network exception occurs, exception positioning is implemented quite easily, and the reliability and security of a system is improved.

As a specific implementation manner, a physical server where the mirror source virtual port and the mirror destination virtual port are located is the same physical server where the monitoring virtual machine is located.

In this embodiment, in step B20, the monitoring at least one mirror source virtual port according to the mirrored packet may specifically include:
parsing packet header information of the mirrored packet, obtaining a source address, according to the source address, determining a mirror source virtual port that sends the mirrored packet, and monitoring the mirror source virtual port that sends the mirrored packet.

Specifically, the packet header information of the packet includes a source address and a destination address, where the source address and the destination address may specifically be a source medium access control (Medium Access Control, MAC for short) address and a destination MAC address. Each virtual network interface card has an MAC address, and a virtual machine allocated the virtual network interface card may be identified through the MAC address. The monitoring virtual machine receives the mirrored packet from the mirror destination virtual port, and the content of the mirrored packet is the same as that of the original packet. Therefore, the packet header of the mirrored packet also includes a source address. According to the source address, the monitoring virtual machine may determine the virtual network interface card that sends the packet, and the mirror source virtual port corresponding to the virtual network interface card, and monitor the mirror source virtual port, thereby implementing the monitoring on the virtual machine corresponding to the mirror source virtual port.

FIG 4 is a schematic structural diagram of a virtual port monitoring apparatus provided in an embodiment of the present invention. As shown in FIG. 4, the virtual port monitoring apparatus 81 provided in this embodiment may specifically implement each step of the embodiment shown in FIG. 1, the specific implementation process is not repeated herein again.

The virtual port monitoring apparatus 81 provided in this embodiment specifically includes an interception unit 11 and a mirroring unit 12. The interception unit 11 is configured to intercept a packet received and/or sent by at least one mirror source virtual port 82. The mirroring unit 12 is configured to, when the packet received and/or sent by the at least one mirror source virtual port 82 is intercepted, mirror the packet to a mirror destination virtual port 83, so that a monitoring virtual machine 841 monitors the at least one mirror source virtual port 82 according to the mirrored packet received from the mirror destination virtual port 83, where the monitoring virtual machine 841 is allocated a virtual network interface card 85, and the virtual network interface card 85 provides the mirrored packet received from the mirror destination virtual port 83 to the monitoring virtual machine 841.

In the virtual port monitoring apparatus 81 provided in this embodiment, the interception unit 11 intercepts the packet received and/or sent by the at least one mirror source virtual port 82. When the packet received and/or sent by the at least one mirror source virtual port 82 is intercepted, the mirroring unit 12 mirrors the packet to the mirror destination virtual port 83, so that the monitoring virtual machine 841 monitors at least one mirror source virtual port 82 according to the mirrored packet received from the mirror destination virtual port 83 by the virtual network interface card 85 allocated to the monitoring virtual machine 841. By monitoring at least one mirror source virtual port 82, the monitoring on a virtual machine corresponding to the mirror source virtual port 82 is implemented, and the monitoring on packets among multiple virtual machines of a same physical server is further implemented. When a network exception occurs, exception positioning is implemented quite easily, and the reliability and security of a system is improved.

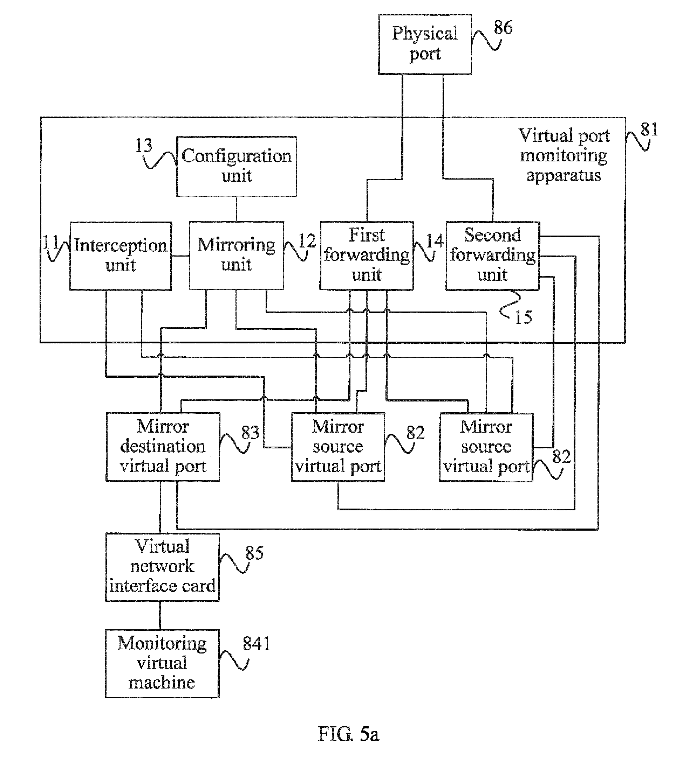

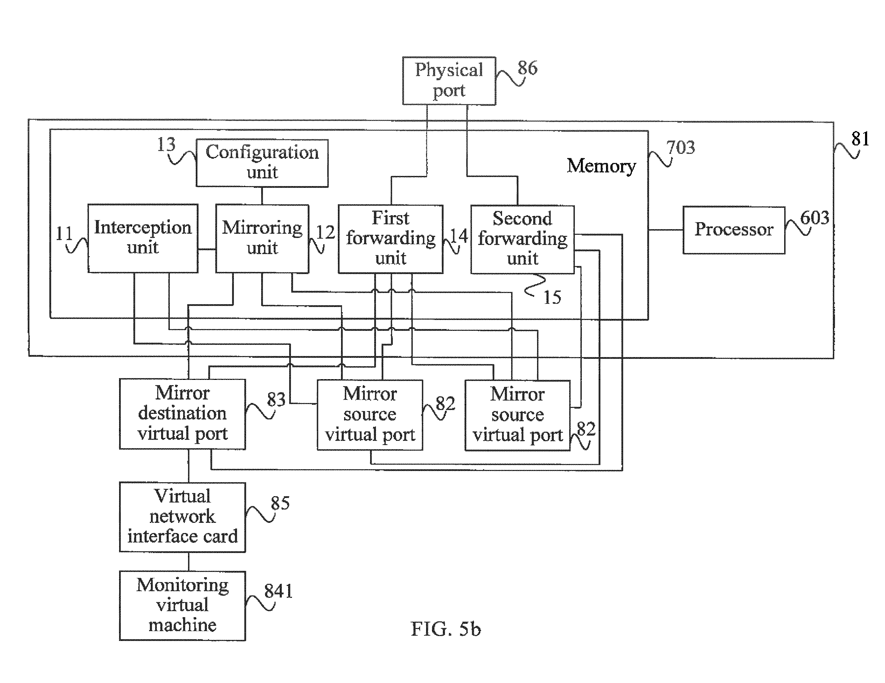

FIG. 5a is a schematic structural diagram of another virtual port monitoring apparatus provided in an embodiment of the present invention. As shown in FIG. 5, as a specific implementation manner, a physical server where the mirror source virtual port 82 and the mirror destination virtual port 83 are located is the same physical server where the monitoring virtual machine 841 is located.

Furthermore, in this embodiment, the virtual port monitoring apparatus 81 may further include a configuration unit 13, where the configuration unit 13 is configured to, according to a received configuration parameter, configure at least one virtual port as the mirror source virtual port 82, configure a virtual port other than the at least one virtual port as the mirror destination virtual port 83, and set a mirroring relationship between the at least one mirror source virtual port 82 and the mirror destination virtual port 83, and a mirroring mode of each mirror source virtual port 82, where the mirroring mode includes one of the following modes: receiving and sending a mirror, receiving a mirror or sending a mirror.

Furthermore, in this embodiment, the virtual port monitoring apparatus 81 may further include a first forwarding unit 14, where the first forwarding unit 14 is configured to parse packet header information of a first packet received from a physical port 86, obtain a first destination address, and send the first packet to a virtual port corresponding to the first destination address. The virtual port may be the mirror source virtual port 82 or the mirror destination virtual port 83.

Furthermore, in this embodiment, the virtual port monitoring apparatus 81 may further include a second forwarding unit 15, where the second forwarding unit 15 is configured to parse packet header information of a second packet received from a virtual port, obtain a second destination address, if the second destination address corresponds to a virtual port, send the second packet to the virtual port corresponding to the second destination address, and if the second destination address corresponds to no virtual port, send the second packet to the physical port 86. The virtual port may be the mirror source virtual port 82 or the mirror destination virtual port 83.

FIG 5b is a schematic structural diagram of still another virtual port monitoring apparatus provided in an embodiment of the present invention. As shown in FIG. 5b, a memory 703 and a processor 603 are included. The memory 703 is configured to store an instruction used for implementing each unit in FIG. 5a, and the processor 603 is connected to the memory 703 and executes the instruction stored in the memory 703, so as to implement corresponding functions. The function of each unit in the memory 703 in FIG 5b is the same as the function of each unit in FIG. 5a, which is not described in detail in the embodiment of the present invention.

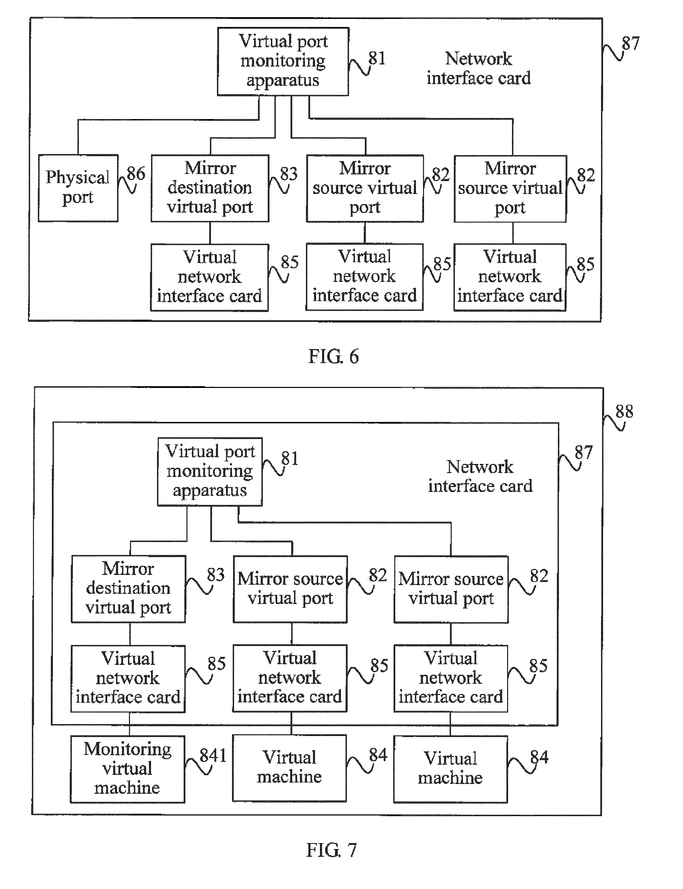

FIG 6 is a schematic structural diagram of a network interface card provided in an embodiment of the present invention. As shown in FIG 6, the network interface card 87 provided in this embodiment includes a physical port 86, multiple virtual network interface cards 85 and a virtual port corresponding to each virtual network interface card 85, and further includes a virtual port monitoring apparatus 81 provided in any embodiment of the present invention, where the multiple virtual ports include at least one mirror source virtual port 82 (two are shown in FIG 6) and a mirror destination virtual port 83.

FIG 7 is a schematic structural diagram of a server provided in an embodiment of the present invention. As shown in FIG. 7, in this embodiment, the server 88 includes multiple virtual machines 84, and further includes a network interface card 87 provided in any embodiment of the present invention, where each virtual machine 84 is allocated a virtual network interface card 85 of the network interface card 87, the multiple virtual machines 84 include at least one monitoring virtual machine 841 (one is shown in FIG. 7), and the virtual network interface card 85 allocated to the monitoring virtual machine 841 provides the mirrored packet, which is received from a mirror destination virtual port 83 of the network interface card 87, to the monitoring virtual machine 841. The virtual port monitoring apparatus 81 in the network interface card 87 mirrors the packet, which is received and/or sent from at least one mirror source virtual port 82, to the mirror destination virtual port 83.

Persons of ordinary skill in the art may understand that all or part of the steps of the methods in the embodiment may be implemented by a program instructing relevant hardware. The program may be stored in a computer readable storage medium. When the program is run, the foregoing steps of the methods in the embodiment are performed. The storage medium may be any medium capable of storing program codes, such as ROM, RAM, magnetic disk, or optical disk.

Finally, it should be noted that each embodiment described above is merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, and such modifications or replacements cannot make the essence of the corresponding technical solutions depart from the scope of the technical solutions of the embodiments of the present invention.

## Claims

1. A virtual port monitoring method, **characterized by** comprising:
intercepting a packet received and/or sent by at least one mirror source virtual port; and
when the packet received and/or sent by the at least one mirror source virtual port is intercepted, mirroring the packet to a mirror destination virtual port, so that a monitoring virtual machine monitors the at least one mirror source virtual port according to the mirrored packet received from the mirror destination virtual port.

2. The virtual port monitoring method according to claim 1, wherein a physical server where the at least one mirror source virtual port and the mirror destination virtual port are located is the same physical server where the monitoring virtual machine is located.

3. The virtual port monitoring method according to claim 1 or 2, wherein before the intercepting a packet received and/or sent by at least one mirror source virtual port, the method further comprises:
according to a received configuration parameter, configuring at least one virtual port as the mirror source virtual port, configuring a virtual port other than the at least one virtual port as the mirror destination virtual port, and setting a mirroring relationship between the at least one mirror source virtual port and the mirror destination virtual port, and a mirroring mode of each mirror source virtual port, wherein the mirroring mode comprises one of the following modes: receiving and sending a mirror, receiving a mirror or sending a mirror.

4. The virtual port monitoring method according to any one of claims 1 to 3, further comprising:
parsing packet header information of a first packet received from a physical port, obtaining a first destination address, and sending the first packet to a virtual port corresponding to the first destination address.

5. The virtual port monitoring method according to any one of claims 1 to 3, further comprising:
parsing packet header information of a second packet received from a virtual port, obtaining a second destination address, if the second destination address corresponds to a virtual port, sending the second packet to the virtual port corresponding to the second destination address, and if the second destination address corresponds to no virtual port, sending the second packet to a physical port.

6. A virtual port monitoring method, **characterized by** comprising:
receiving a mirrored packet from a mirror destination virtual port; and
according to the mirrored packet, monitoring at least one mirror source virtual port, wherein the mirrored packet is a mirrored packet of a packet received and/or sent by the at least one mirror source virtual port.

7. The virtual port monitoring method according to claim 6, wherein:
the method is executed by a monitoring virtual machine; and
a physical server where the at least one mirror source virtual port and the mirror destination virtual port are located is the same physical server where the monitoring virtual machine is located.

8. The virtual port monitoring method according to claim 6 or 7, wherein the monitoring at least one mirror source virtual port according to the mirrored packet comprises:
parsing packet header information of the mirrored packet, obtaining a source address, according to the source address, determining a mirror source virtual port that sends the mirrored packet, and monitoring the mirror source virtual port that sends the mirrored packet.

9. A virtual port monitoring apparatus, **characterized by** comprising:
an interception unit, configured to intercept a packet received and/or sent by at least one mirror source virtual port; and
a mirroring unit, configured to, when the packet received and/or sent by the at least one mirror source virtual port is intercepted, mirror the packet to a mirror destination virtual port, so that a monitoring virtual machine monitors the at least one mirror source virtual port according to the mirrored packet received from the mirror destination virtual port.

10. The virtual port monitoring apparatus according to claim 9, wherein a physical server where the at least one mirror source virtual port and the mirror destination virtual port are located is the same physical server where the monitoring virtual machine is located.

11. The virtual port monitoring apparatus according to claim 9 to 10, further comprising:
a configuration unit, configured to, according to a received configuration parameter, configure at least one virtual port as the mirror source virtual port, configure a virtual port other than the at least one virtual port as the mirror destination virtual port, and set a mirroring relationship between the at least one mirror source virtual port and the mirror destination virtual port, and a mirroring mode of each mirror source virtual port, wherein the mirroring mode comprises one of the following modes: receiving and sending a mirror, receiving a mirror or sending a mirror.

12. The virtual port monitoring apparatus according to any one of claims 9 to 11, further comprising:
a first forwarding unit, configured to parse packet header information of a first packet received from a physical port, obtain a first destination address, and send the first packet to a virtual port corresponding to the first destination address.

13. The virtual port monitoring apparatus according to any one of claims 9 to 11, further comprising:
a second forwarding unit, configured to parse packet header information of a second packet received from a virtual port, obtain a second destination address, if the second destination address corresponds to a virtual port, send the second packet to the virtual port corresponding to the second destination address, and if the second destination address corresponds to no virtual port, send the second packet to a physical port.

14. A network interface card, **characterized by** comprising a physical port, multiple virtual network interface cards and a virtual port corresponding to each virtual network interface card, and further comprising the virtual port monitoring apparatus according to any one of claims 9 to 13, wherein:
the multiple virtual ports comprise at least one mirror source virtual port and a mirror destination virtual port.

15. A server, **characterized by** comprising multiple virtual machines, and further comprising the network interface card according to claim 14, wherein:
each virtual machine is allocated a virtual network interface card of the network interface card, the multiple virtual machines comprise at least one monitoring virtual machine, wherein the virtual network interface card allocated to the monitoring virtual machine provides the mirrored packet received from the mirror destination virtual port of the network interface card to the monitoring virtual machine.
